# EUROPEAN PATENT SPECIFICATION

(11) **EP 3 029 598 B1**
(45) Date of publication and mention of the grant of the patent: **06.03.2019**
(21) Application number: 13890584.9
(22) Date of filing: 31.07.2013
(51) Int. Cl.: G06F 21/64, H04N 1/32, H04L 29/06, G06F 17/30, H04L 9/14, H04L 9/30

(54) **METHOD IMPLEMENTED BY COMPUTER FOR CAPTURING EVIDENTIARY AUDIOVISUAL AND/OR MULTIMEDIA INFORMATION AND COMPUTER PROGRAM**
COMPUTERIMPLEMENTIERTES VERFAHREN ZUR ERFASSUNG AUDIOVISUELLER UND/ODER MULTIMEDIA-BEWEISINFORMATIONEN UND COMPUTERPROGRAMM
PROCÉDÉ MIS EN OEUVRE PAR ORDINATEUR POUR CAPTER DES INFORMATIONS AUDIOVISUELLES ET/OU MULTIMÉDIA PROBATOIRES ET PROGRAMME D'ORDINATEUR

(43) Date of publication of application: 08.06.2016
(73) Proprietor: Martínez Monreal, Salud, 30820 Alcantarilla (Murcia) (ES)
(72) Inventor: Martínez Monreal, Salud, 30820 Alcantarilla (Murcia) (ES)
(74) Representative: Temiño Ceniceros, Ignacio
(86) International application number: PCT/ES2013/070567
(87) International publication number: WO 2015/015016

(56) References cited:
- EP-A1- 1 758 366
- EP-A2- 1 189 429
- EP-A2- 2 141 630
- US-A1- 2012 328 148
- US-B2- 6 996 251

## Description

### TECHNICAL FIELD

The present invention generally relates to the field of mobile communications, and more particularly to a method implemented by computer for capturing and processing certified or evidentiary audiovisual and/or multimedia information, particularly useful as a complaint, and to a computer program implementing parts of the method.

### PRIOR ART

The vast majority of audiovisual and/or multimedia information, such as photographs, pictures, video, etc., that can be captured using a user computing device, for example a mobile telephone, a smartphone, a tablet, etc., is mutable. In other words, the captured and/or recorded information can be modified, altered in part or erased by a user during the capture, before the transmission or during same, whether the user is a user that is authorized by the system or not authorized by the system.

In environments operating with large volumes of information obtained from a user computing device, or in order for that information to be susceptible to being used as evidence, for example in the event of a crime, it is necessary to assure the integrity and security of said information with a system that eliminates the risk of data manipulation.

The prior art for capturing from a user computing device and processing audiovisual and/or multimedia information to be later used as reliable evidence or certified information, performs only storage and subsequent sending of said information to be used as evidence. For example, the mechanisms used for forensic technology cannot certify that the evidence obtained from an electronic device is true and not previously entered by a malicious user.

The present invention improves the methods currently known in the prior art providing a new mechanism that allows obtaining audiovisual evidence captured from a user computing device with a certificate that said evidence was not manipulated by said user or another source.

### DISCLOSURE OF THE INVENTION

The invention provides a method implemented by computer for capturing and processing audiovisual and/or multimedia information to be used as evidence from a user computing device comprising, as in the known techniques:
a) capturing audiovisual and/or multimedia information by means of a processing unit located in a user computing device;
b) storing said captured audiovisual and/or multimedia information in a first memory of said processing unit; and
c) sending said audiovisual and/or multimedia information via a secure channel to a server for storing same as evidence.

According to a basic embodiment, the method characteristically consists of performing additional steps, and particularly:
d) a control module of said processing unit receiving, in real time at the same time as said step a), the captured audiovisual and/or multimedia information and acquiring at least data about the date and time of capture of the information;
e) said control module comparing said received audiovisual and/or multimedia information with the information stored in said first memory and checking if they match, and
f1)performing said step c) if both sets of information match; or if differences are detected:
f2)sending said information, said audiovisual and/or multimedia information received in said control module together with said data about the date and time, and at least part of said audiovisual and/or multimedia information stored in the first memory to said server via a secure channel.

In a preferred embodiment, said step e) comprises comparing the length of said captured audiovisual and/or multimedia information received with the length of the information stored in said first memory and checking if they match, later performing a byte-by-byte comparison of said sets of information and checking for a match or discrepancy.

In addition to said data about the date and time of capture of the information, the method can also acquire in said step a) data referring to the user computing device such as location, model, brand, operating system and/or operating system version.

For the purpose of increasing security of the proposed method or reliably assuring that the information captured has not been manipulated, the audiovisual and/or multimedia information is stored encrypted in said first memory, encryption preferably being performed at the same time as the storage, and it is received in the control module encrypted. Therefore, the comparison of step e), and particularly the byte-by-byte comparison, is also performed from encrypted information

Likewise, the sending of information to the server in said step f1) or f2) will also be done in an encrypted manner. The encryption will generally be performed by means of private key and public key encryption, although depending on the embodiment a single encryption of one of the two kinds, public or private, could be used.

According to the proposed method, the audiovisual and/or multimedia information of said first memory, which cannot be accessed by the user of the computing device, is eliminated once said step e) is performed. In other words, the information or file stored in the first memory is eliminated but the bytes of the file are kept for the subsequent sending of same to the server. The result is obtaining evidence not susceptible to being manipulated by the user.

If it was not possible to perform the sending to the server in step f1) or f2), the proposed method proposes performing an iteration of said sending a predetermined number of times that can be established by the user.

The total time of a sequence for the capturing and sending of evidentiary information according to the proposed method is around 500 milliseconds (a half-second) at most, being able to be performed, i.e., the secure information or evidence being able to be obtained, in about 300 milliseconds, although a higher or lower speed will also depend on the technical characteristics of the user computing device used and on the size of the captured audiovisual and/or multimedia information (audio, photographs, video, GPS data, etc.).

In addition, when the captured information is obtained directly from a web (for example any information obtained from Internet), the process is identical to that of obtaining audiovisual and/or multimedia information but without having to store the information in the first memory. In this case, the captured information will be the information from a complete web page, even though the user cannot see all of it in the computing device, i.e., not just the information appearing on the display of the user computing device is obtained.

The invention also provides a computer program comprising code instructions suitable for performing steps e) and f1) or f2) of claim 1 when they are run in a data processing computing apparatus with which said audiovisual and/or multimedia information can be obtained.

### BRIEF DESCRIPTION OF THE DRAWINGS

Figure 1 is a flowchart explaining the operation of the proposed method according to one embodiment.
Figure 2 is an example of the actuation levels of an application implementing the proposed method, showing a display with different actuation alternatives and submenus.

### DETAILED DISCLOSURE OF EMBODIMENTS

The present invention provides a new mechanism for obtaining certified, evidentiary audiovisual and/or multimedia information, such as photographs, video, GPS data, and/or data about the type of application obtained from a user computing device, which allows using said information as evidence particularly of crimes occurring in any scene, including a communications network certifying that the information has not been manipulated by the user.

The invention involves the following actions: said audiovisual and/or multimedia information is captured and stored in a first memory of the processing unit; at the same time as the capture, a control module of the processing unit also receives the audiovisual and/or multimedia information and acquires at least data about the date and time of capture of the information;
Next, the control module compares the length of the captured audiovisual and/or multimedia information received with the length of the information stored in said first memory and if such lengths match, it then performs a later byte-by-byte comparison of said sets of information for subsequently sending the captured audiovisual and/or multimedia information to a server for storing same as evidence if such checking was satisfactory, i.e., both sets of information match. If any discrepancy is detected, i.e., if the sets of information do not match, the audiovisual and/or multimedia information received together with the data about the date and time and at least part of said audiovisual and/or multimedia information stored in the first memory are sent to the server via a secure channel.

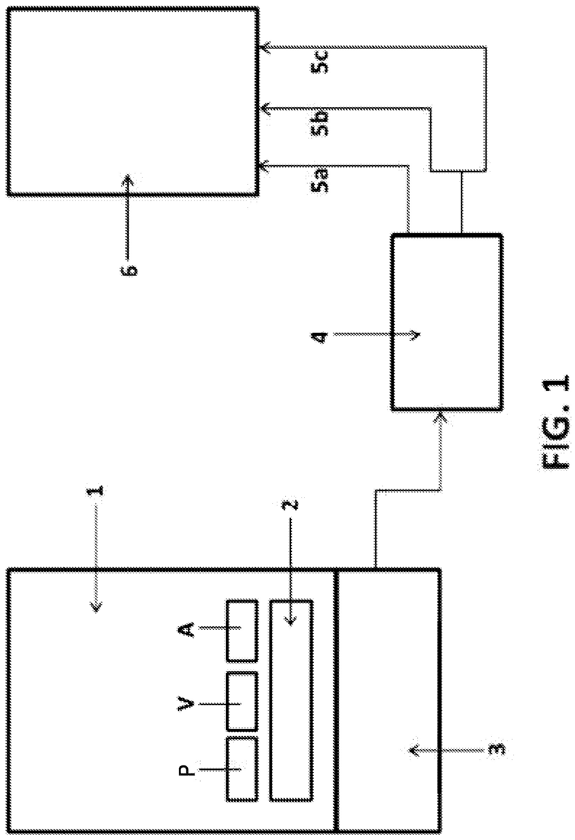

Figure 1 schematically shows the method indicated by a user computing device 1, in which keys providing data capture actuation alternatives according to (P= picture; V= video; and A= audio) are indicated with boxes, the confirmation of which is done by a key 2, for sending. Reference number 3 indicates said first data storage memory. Reference number 4 indicates the control module receiving the same audiovisual and/or multimedia information at the same time as the capture by the memory 3.

Depending on whether or not the sets of information of the memory 3 and of the module 4 being compared match, the information 5a verified as not having been altered, or the information 5b received in the control module 4, and at least part 5c of the information of said memory 3, is sent. The sending of the information 5a or sets of information 5b and 5c is done via a secure channel to a server 6.

According to one embodiment, in order to assure complete and secure evidence that the audiovisual and/or captured information has not been manipulated, said information can be encrypted both in said first memory 3 and in the control module by means of using public and private key encryption, or one of the two.

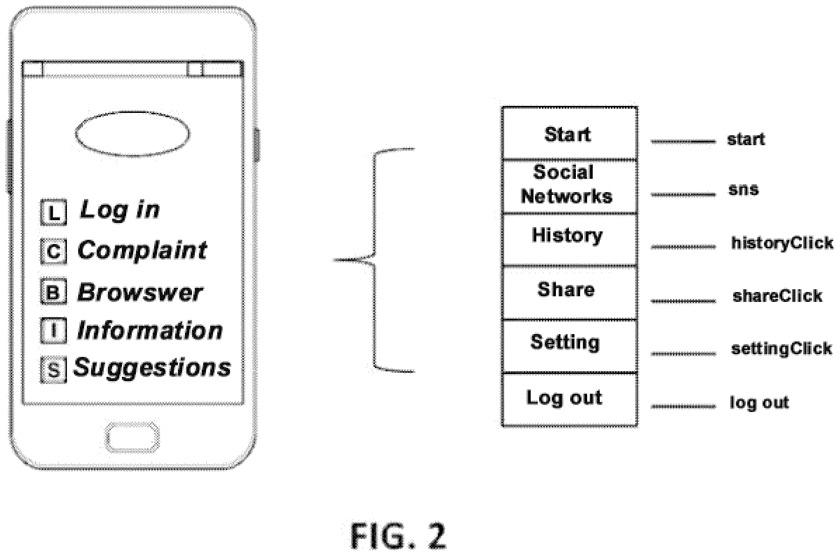

In order to use the invention, the user will preferably be logged in, for example by means of using a user identifier and password, which could be done through a software application installed in the computing device (mobile telephone, smartphone, tablet, PDA, or the like) or by visiting a web portal with direct access to the application. For example, if access is done through said software application, this application will contain a series of submenus or a button list, as seen in Figure 2, which could be used by the user once logged in. These submenus will generally include: a start button to load the application homepage; an access and/or share button for social networks; a history button; a button for sharing information or files with other users; a setting button and a button for logging out of said software application.

The audiovisual and/or multimedia information will be lost when the user decides to go back to another submenu or when the user chooses to capture another different type of information. Likewise, the information could be lost when the user decides to close the software application responsible for implementing the method in said user computing device without having sent the information to the server for a subsequent complaint or accreditation of reliable evidence.

For one embodiment, for example taking a photograph, for the purpose of preventing manipulation of evidence from the photographic camera of the user computing device up until it is sent to the server, the application implementing the method and/or the control module 4 takes control of both the camera of the computing device and of the flash or other optic focusing devices, and once control has been taken, the view captured can be shown to the user on a display. When the user decides to take the photograph, the user directly obtains the original bytes of the information with which a temporary file is created in private mode that cannot be accessed by the user, for subsequent representation of same, the evidence acquisition elements are concealed and elements for evidence or a complaint of the software application of the control module are shown again. This entire process for one photograph can last on average between 100-150 milliseconds.

For another embodiment, for example if the user decides to make a video, as in the previous case, access to the hardware of the computing device is obtained by the application implementing the method and/or the control module 4 to control both the camera and the flash or other optic devices. Once the user decides to make the video, the displaying of the ongoing video is managed. Before starting the recording, the characteristics of the video are defined (number of audio channels, audio and video compression level, output formats, etc.), and also the limitations of the file which preferably will not exceed a two-minute recording or a 13 MB size in the case of common user computing devices or terminals; however, in devices with a larger data storage capacity the recording minutes and size can be much larger. The user directly obtains the bytes during the recording without storing them in any file. It is also defined where this temporary file will be stored while it is generated so that it cannot be manipulated, which will generally be in said inaccessible first memory 3 so that the user can preview it.

It is also checked that the system has enough space to store the video before making it, indicating by means of a dialogue the lack of space, if this were to occur. In addition a progress bar is shown on the display with the space that is available and the space that is being taken up by the video as it is generated.

When the video ends, the bytes corresponding to the video can be placed in the evidence or complaint acquisition window, without the user having had the possibility to manipulate them. The time of this process is around 500 milliseconds at most depending on the hardware of the computing device and on the size of the video.

The class SOSHTTPCIient, which has various methods for being able to modify the connection address with the server or converting an input data strip "InputStream" to "String" and "array" or a set of bytes to hexadecimal, has been implemented for communication with the server. The way to send the evidence or complaint in both cases (steps f1 or f2) is by means of a connection "Post". When it is sent without any attached file (step f1) the connection is done through the objects "MyHttpsClient", which it inherits from the object "DefaultHttpClient", in which the parameters required for implementing a secure connection, "HttpPost" and "HttpResponse", have been implemented. In the case of being sent with an attachment, step f2, the connection is established via an object "HttpsURLConnection", which allows performing data input and output and other setting elements, such as allowing splitting up the sending in order to not have problems with the output buffer and the required security implementation.

The data is always sent encrypted to prevent user identity theft problems. After the petition, the response from the server as to if the sequence was correct is awaited. In case of any problem in the communication, a communication of code "IOException" will be launched in which the user will be informed that there was a problem and to try sending the evidence or complaint again at a later time.

The invention provides a system that is able to generate audiovisual evidence in any computing device having the required hardware, without the system itself or the user being able to manipulate it, from the time in which it is obtained until it is logged in.

The quality of burden of proof and the truthfulness thereof are certified through a process:
- Said process is fast because the time it takes to gather the evidence in a secure manner does not exceed a half-second, and one sixth of a second at least being required, depending on the type of file. The information is obtained directly in bytes that are stored directly in the first memory 3 encrypted, thereby preventing any manipulation of the obtained information. A file is generated with said bytes so that the user can obtain a preview of the information. This information is obtained in a process lasting a half-second
- Said process is secure as it always checks that the bytes that are sent are the same as those that were created, that they take up the same space in the memory and that they contain the same information.

The invention allows obtaining evidence with legal value, making the burden of proof required for an agreement or trial easier.

The invention is particularly useful for the following computing devices or systems: GPS locating and viewing systems, forensic computing information infrastructure, tools for the analysis of hard drives, emails, mobile devices, networks, both internal and external network filtering and monitoring, systems for espionage or military use for obtaining evidence from the web, obtaining evidence in networks outside the World Wide Web or www; any device with a network connection and user communication and data interface capabilities.

## Claims

1. A method implemented by computer for capturing and processing evidentiary audiovisual and/or multimedia information, comprising:
a) capturing audiovisual and/or multimedia information by means of a processing unit located in a user computing device (1);
b) storing said captured audiovisual and/or multimedia information in a first memory (3) of said processing unit; and
c) sending said audiovisual and/or multimedia information via a secure channel to a server (6) for storing same as evidence,
**characterized in that** the method comprises performing the following steps:
d) a control module (4) of said processing unit receiving, in real time at the same time as said step a), said captured audiovisual and/or multimedia information and acquiring at least data about the date and time of capture of the information;
e) said control module (4) comparing said received audiovisual and/or multimedia information with the information stored in said first memory (3) and checking if they match, and
f1) performing said step c) if both sets of information match; or if it is detected that both sets of information do not match:
f2) sending said information, said audiovisual and/or multimedia information received in said control module together with said data about the date and time, and at least part of said audiovisual and/or multimedia information stored in the first memory (3) to said server (6) via a secure channel.

2. The method implemented by computer according to claim 1, **characterized in that** said comparison between the audiovisual and/or multimedia information received by the control module (4) with the information captured by the user computing device (1) and stored in said first memory of said step e) comprises:
e1) said control module (4) comparing the length of said captured audiovisual and/or multimedia information received with the length of the information stored in said first memory (3); and
e2) performing a later byte-by-byte comparison of said two sets of information.

3. The method implemented by computer according to claim 1 or 2, **characterized in that** the storing of audiovisual and/or multimedia information in said first memory (3) of said step b) and the receiving of information in said control module (4) is performed in an encrypted manner.

4. The method according to claim 3, when it depends on claim 2, **characterized in that** said byte-by-byte comparison of said two sets of information is performed with both sets of information encrypted.

5. The method implemented by computer according to claim 1, **characterized in that** said sending of information of said step f1) or f2) to the server (6) is also performed in an encrypted manner.

6. The method implemented by computer according to claims 3 to 5, **characterized in that** said encryption of the information is performed by means of a private key and public key encryption.

7. The method implemented by computer according to any one of the preceding claims, **characterized in that** it comprises eliminating the audiovisual and/or multimedia information from said first memory (3) once said step f1) or f2) is performed.

8. The method implemented by computer according to claim 1, **characterized in that** if the sending in said step f1) or f2) is rejected, the method comprises performing an iteration of said sending a predetermined number of times.

9. The method implemented by computer according to claim 1, **characterized in that** said first memory (3) cannot be accessed by said user of said user computing device.

10. The method implemented by computer according to claim 1, **characterized in that** it further comprises compiling in said memory (3) additional data about the captured audiovisual and/or multimedia information, such as location of or information about said user computing device, including model, brand, operating system and/or operating system version.

11. The method implemented by computer according to claim 1, **characterized in that** it further comprises storing said captured audiovisual and/or multimedia information in a second memory associated with said user computing device.

12. The method implemented by computer according to the preceding claims, **characterized in that** said steps d), e), f1) or f2) are performed in a period of time not exceeding a half-second.

13. The method implemented by computer according to the preceding claims, **characterized in that** said audiovisual and/or multimedia information comprises audio, photographs, video, GPS data, and/or data about the type of application.

14. A computer program comprising code instructions suitable for performing the method of any one of the claims 1 to 13 when said computer program is run in a data processing apparatus.

## Patentansprüche

1. Verfahren, das von einem Computer implementiert wird, zum Erfassen und Verarbeiten von audiovisuellen und/oder multimedialen Beweisinformationen, umfassend:
a) Erfassen von audiovisuellen und/oder multimedialen Informationen mittels einer Verarbeitungseinheit, die sich in einer Benutzercomputervorrichtung (1) befindet;
b) Speichern der erfassten audiovisuellen und/oder multimedialen Informationen in einem ersten Speicher (3) der Verarbeitungseinheit; und
c) Senden der audiovisuellen und/oder multimedialen Informationen über einen sicheren Kanal an einen Server (6) zur Speicherung derselben als Beweismittel,
**dadurch gekennzeichnet, dass** das Verfahren das Ausführen der folgenden Schritte umfasst:
d) ein Steuermodul (4) der Verarbeitungseinheit empfängt in Echtzeit, zur gleichen Zeit wie der Schritt a), die erfassten audiovisuellen und/oder multimedialen Informationen und erhält mindestens Daten über das Datum und die Uhrzeit der Erfassung der Informationen;
e) das Steuermodul (4) vergleicht die empfangenen audiovisuellen und/oder multimedialen Informationen mit den in dem ersten Speicher (3) gespeicherten Informationen und überprüft, ob sie übereinstimmen, und
f1) Ausführen des Schrittes c), wenn beide Informationssätze übereinstimmen; oder, wenn festgestellt wird, dass beide Informationssätze nicht übereinstimmen:
f2) Senden der Informationen, der in dem Steuermodul empfangenen audiovisuellen und/oder multimedialen Informationen zusammen mit den Daten über Datum und Uhrzeit und mindestens einem Teil der im ersten Speicher (3) gespeicherten audiovisuellen und/oder multimedialen Informationen über einen sicheren Kanal an den Server (6).

2. Verfahren, das vom Computer nach Anspruch 1 implementiert wird, **dadurch gekennzeichnet, dass** der Vergleich zwischen den vom Steuermodul (4) empfangenen audiovisuellen und/oder multimedialen Informationen mit den von der Benutzercomputervorrichtung (1) erfassten und im ersten Speicher des Schrittes e) gespeicherten Informationen Folgendes umfasst:
e1) Vergleichen, mit dem Steuermodul (4), der Länge der empfangenen erfassten audiovisuellen und/oder multimedialen Informationen mit der Länge der in dem ersten Speicher (3) gespeicherten Informationen; und
e2) Durchführen eines späteren byteweisen Vergleichs der beiden Informationssätze.

3. Verfahren, das vom Computer nach Anspruch 1 oder 2 implementiert wird, **dadurch gekennzeichnet, dass** das Speichern von audiovisuellen und/oder multimedialen Informationen in dem ersten Speicher (3) des Schrittes b) und das Empfangen von Informationen in dem Steuermodul (4) auf verschlüsselte Weise durchgeführt wird.

4. Verfahren nach Anspruch 3, wenn es von Anspruch 2 abhängt, **dadurch gekennzeichnet, dass** der byteweise Vergleich der beiden Informationssätze mit beiden verschlüsselten Informationssätzen durchgeführt wird.

5. Verfahren, das vom Computer nach Anspruch 1 implementiert wird, **dadurch gekennzeichnet, dass** das Senden von Informationen des Schrittes f1) oder f2) an den Server (6) ebenfalls auf verschlüsselte Weise durchgeführt wird.

6. Verfahren, das vom Computer nach den Ansprüchen 3 bis 5 implementiert wird, **dadurch gekennzeichnet, dass** die Verschlüsselung der Informationen mittels einer Verschlüsselung mit privatem Schlüssel und mit öffentlichem Schlüssel durchgeführt wird.

7. Verfahren, das vom Computer nach einem der vorhergehenden Ansprüche implementiert wird, **dadurch gekennzeichnet, dass** es das Entfernen der audiovisuellen und/oder multimedialen Informationen aus dem ersten Speicher (3) umfasst, sobald der Schritt f1) oder f2) ausgeführt wird.

8. Verfahren, das vom Computer nach Anspruch 1 implementiert wird, **dadurch gekennzeichnet, dass**, wenn das Senden in dem Schritt f1) oder f2) abgelehnt wird, das Verfahren das Durchführen einer Iteration des Sendens eine vorbestimmte Anzahl von Malen umfasst.

9. Verfahren, das vom Computer nach Anspruch 1 implementiert wird, **dadurch gekennzeichnet, dass** der Benutzer der Benutzercomputervorrichtung nicht auf den ersten Speicher (3) zugreifen kann.

10. Verfahren, das vom Computer nach Anspruch 1 implementiert wird, **dadurch gekennzeichnet, dass** es ferner das Zusammenstellen zusätzlicher Daten über die erfassten audiovisuellen und/oder multimedialen Informationen in dem Speicher (3) umfasst, wie beispielsweise den Standort der oder Informationen über die Benutzercomputervorrichtung, einschließlich Modell, Marke, Betriebssystem und/oder Betriebssystem-Version.

11. Verfahren, das vom Computer nach Anspruch 1 implementiert wird, **dadurch gekennzeichnet, dass** es ferner das Speichern der erfassten audiovisuellen und/oder multimedialen Informationen in einem zweiten Speicher umfasst, der der Benutzercomputervorrichtung zugeordnet ist.

12. Verfahren, das vom Computer nach den vorhergehenden Ansprüchen implementiert wird, **dadurch gekennzeichnet, dass** die Schritte d), e), f1) oder f2) in einem Zeitraum von höchstens einer halben Sekunde durchgeführt werden.

13. Verfahren, das vom Computer nach den vorhergehenden Ansprüchen implementiert wird, **dadurch gekennzeichnet, dass** die audiovisuellen und/oder multimedialen Informationen Audio, Fotos, Videos, GPS-Daten und/oder Daten über die Art der Anwendung umfassen.

14. Computerprogramm, umfassend Codebefehle, die geeignet sind, das Verfahren nach einem der Ansprüche 1 bis 13 auszuführen, wenn das Computerprogramm in einer Datenverarbeitungsvorrichtung ausgeführt wird.

## Revendications

1. Procédé mis en oeuvre par ordinateur pour saisir et traiter des informations probantes audiovisuelles et/ou multimédia, comprenant :
a) la saisie d'informations audiovisuelles et/ou multimédia au moyen d'une unité de traitement située dans un dispositif informatique d'utilisateur (1) ;
b) le stockage desdites informations audiovisuelles et/ou multimédia saisies dans une première mémoire (3) de ladite unité de traitement ; et
c) l'envoi desdites informations audiovisuelles et/ou multimédia via un canal sécurisé à un serveur (6) pour le stockage de ces dernières comme une preuve,
**caractérisé en ce que** le procédé comprend la mise en oeuvre des étapes suivantes :
d) un module de commande (4) de ladite unité de traitement recevant, en temps réel en même temps que ladite étape a), lesdites informations audiovisuelles et/ou multimédia saisies et acquérant au moins des données sur la date et l'heure de saisie des informations ;
e) ledit module de contrôle (4) comparant lesdites informations audiovisuelles et/ou multimédia reçues avec les informations stockées dans ladite mémoire (3) et vérifiant si elles correspondent, et
f1) la réalisation de ladite étape c) si les deux ensembles d'informations correspondent ; ou s'il est détecté que les deux ensembles d'informations ne correspondent pas :
f2) l'envoi desdites informations, lesdites informations audiovisuelles et/ou multimédia reçues dans ledit module de commande conjointement auxdites données sur la date et l'heure, et au moins une partie desdites informations audiovisuelles et/ou multimédia stockées dans la première mémoire (3) audit serveur (6) via un canal sécurisé.

2. Procédé mis en oeuvre par ordinateur selon la revendication 1, **caractérisé en ce que** ladite comparaison entre les informations audiovisuelles et/ou multimédia reçues par le module de commande (4) avec les informations saisies par le dispositif informatique d'utilisateur (1) et stockées dans ladite première mémoire de ladite étape e) comprend :
e1) ledit module de commande (4) comparant la longueur desdites informations audiovisuelles et/ou multimédia saisies reçues avec la longueur des informations stockées dans ladite première mémoire (3) ; et
e2) la mise en oeuvre d'une comparaison ultérieure octet par octet desdites deux ensembles d'informations.

3. Procédé mis en oeuvre par ordinateur selon la revendication 1 ou 2, **caractérisé en ce que** le stockage d'informations audiovisuelles et/ou multimédia dans ladite première mémoire (3) de ladite étape b) et la réception d'informations dans ledit module de commande (4) sont mis en oeuvre de manière chiffrée.

4. Procédé selon la revendication 3, lorsqu'il dépend de la revendication 2, **caractérisé en ce que** ladite comparaison octet par octet desdits deux ensembles d'informations est réalisée avec les deux ensembles d'informations chiffrées.

5. Procédé mis en oeuvre par ordinateur selon la revendication 1, **caractérisé en ce que** ledit envoi d'informations de ladite étape f1) ou f2) au serveur (6) est également mis en oeuvre de manière chiffrée.

6. Procédé mis en oeuvre par ordinateur selon la revendication 3 à 5, **caractérisé en ce que** ledit chiffrement des informations est mis en oeuvre au moyen d'un chiffrement à clé privé et à clé publique.

7. Procédé mis en oeuvre par ordinateur selon l'une quelconque des revendications précédentes, **caractérisé en ce qu'**il comprend l'élimination des informations audiovisuelles et/ou multimédia de ladite première mémoire (3) une fois que ladite étape f1) ou f2) est mise en oeuvre.

8. Procédé mis en oeuvre par ordinateur selon la revendication 1, **caractérisé en ce que** si l'envoi dans ladite étape f1) ou f2) est rejeté, le procédé comprend la mise en oeuvre d'une itération dudit envoi un nombre prédéterminé de fois.

9. Procédé mis en oeuvre par ordinateur selon la revendication 1, **caractérisé en ce que** ladite première mémoire (3) ne peut pas être accédée par ledit utilisateur dudit dispositif informatique d'utilisateur.

10. Procédé mis en oeuvre par ordinateur selon la revendication 1, **caractérisé en ce qu'**il comprend en outre la compilation dans ladite mémoire (3) de données supplémentaires sur les informations audiovisuelles et/ou multimédia saisies, telles que l'emplacement ou les informations sur ledit dispositif informatique d'utilisateur, y compris le modèle, la marque, le système d'exploitation et/ou la version du système d'exploitation.

11. Procédé mis en oeuvre par ordinateur selon la revendication 1, **caractérisé en ce qu'**il comprend en outre le stockage desdites informations audiovisuelles et/ou multimédia saisies dans une deuxième mémoire associée audit dispositif informatique d'utilisateur.

12. Procédé mis en oeuvre par ordinateur selon les revendications précédentes, **caractérisé en ce que** lesdites étapes d), e), f1) ou f2) sont mises en oeuvre dans une période de temps ne dépassant pas une demi-seconde.

13. Procédé mis en oeuvre par ordinateur selon les revendications précédentes, **caractérisé en ce que** lesdites informations audiovisuelles et/ou multimédia comprend les audios, les photographies, les vidéos, les données GPS, et/ou les données sur le type d'application.

14. Programme informatique comprenant des instructions de code apte à mettre en oeuvre le procédé selon l'une quelconque des revendications 1 à 13 lorsque ledit programme informatique est exécuté dans un appareil de traitement de données.
